# DEMANDE DE BREVET EUROPEEN

(11) **EP 4 654 135 A1**
(43) Date de publication de la demande: **26.11.2025**
(21) Numéro de dépôt: 25174689.7
(22) Date de dépôt: 07.05.2025
(51) Int. Cl.: G06T 11/00

(54) **PROCEDE D'IMAGERIE PAR TOMOGRAPHIE ELECTRONIQUE A LARGE CHAMP DE VUE ET RESOLUTION AMELIOREE**

(30) Priorité: 22.05.2024 FR 2405217
(71) Demandeur: Commissariat à l'Energie Atomique et aux Energies Alternatives, 75015 Paris (FR)
(72) Inventeur: SAGHI, Zineb, 38054 GRENOBLE Cedex 09 (FR)
(74) Mandataire: Atout PI Laplace

(57) **Abrégé**

Procédé d'entrainement d'un modèle de correction automatique d'artefacts dans une image d'un échantillon obtenue par tomographie électronique, comprenant les étapes de :
- Réaliser (201) une acquisition d'un premier ensemble de données de projection d'un échantillon au moyen d'un microscope électronique en transmission apte à émettre un faisceau d'électrons en direction de l'échantillon, pour une pluralité d'angles d'inclinaison de l'échantillon par rapport au faisceau d'électrons appartenant à une première plage angulaire,
- Déterminer (202) un premier ensemble de reconstructions tomographiques de l'échantillon à partir du premier ensemble de données de projection,
- Déterminer (203) un second ensemble de reconstructions tomographiques dégradées de l'échantillon à partir d'un sous-ensemble du premier ensemble de données de projection associé à un sous-ensemble d'angles d'inclinaison de la première plage angulaire,
- Entrainer (204) le modèle de correction d'artefacts à corriger le second ensemble de reconstructions tomographiques dégradées de sorte à obtenir le premier ensemble de reconstructions tomographiques.

## Description

L'invention concerne le domaine de la tomographie électronique qui est une technique d'imagerie permettant d'obtenir une image tridimensionnelle (3D) d'un nano-objet avec une résolution de l'ordre du nanomètre.

L'invention porte plus précisément sur un procédé d'imagerie 3D par tomographie électronique permettant à la fois un large champ de vue et une résolution améliorée.

L'invention est basée sur l'utilisation d'un modèle d'intelligence artificielle entrainé pour corriger certains artefacts dans une reconstruction 3D obtenue via une technique d'imagerie par tomographie électronique.

La tomographie électronique est une technique d'imagerie 3D, très utilisée dans les sciences du vivant et les sciences des matériaux afin d'imager un échantillon. Cette technique consiste à réaliser une série de projections en faisant tourner l'échantillon à imager au sein d'un microscope électronique en transmission (TEM). Cette étape est suivie d'une phase d'alignement puis de reconstruction en 3D à l'aide d'un algorithme de reconstruction dédié. L'échantillon est placé sur un porte-objet qui est inséré dans le microscope, ce porte-objet est incliné pour obtenir différents angles d'inclinaison de l'objet par rapport au faisceau d'électrons.

Pour obtenir une reconstruction précise en 3D de l'échantillon, il est souhaitable de réaliser une série d'acquisitions en faisant varier l'angle d'inclinaison sur une plage angulaire aussi complète que possible, c'est-à-dire [-90° ;+90°].

Par ailleurs, il est aussi nécessaire que le champ de vue soit suffisamment large afin que le volume reconstruit soit représentatif de l'échantillon.

Cependant, le champ de vue accessible en 3D est étroitement lié à la géométrie de l'échantillon. Pour réaliser une acquisition, un échantillon est généralement placé sur un porte-objet dédié qui est positionné à l'intérieur du microscope.

Il existe notamment deux types de porte-objets. Un premier type de porte-objet permet l'analyse 3D d'échantillons préparés sous forme de pointe. Dans cette configuration, le diamètre de l'échantillon est limité à une centaine de nanomètres en science des matériaux. Cette valeur peut atteindre 500nm à 1µm lorsque l'échantillon est composé principalement d'éléments légers (échantillons biologiques par exemple).

Un second type de porte-objet permet l'analyse 3D d'échantillons sous forme de lame. Dans cette seconde configuration, le champ de vue est aussi large que la longueur de la lame (typiquement de l'ordre de quelques microns), et l'épaisseur est d'une centaine de nanomètres.

La préparation sous forme de lame permet donc un champ de vue plus large que la préparation sous forme de pointe.

Cependant, la préparation sous forme de lame présente un inconvénient en termes de résolution. En effet, dans cette configuration, un porte-objet dédié permet d'incliner l'échantillon par rapport à l'axe du faisceau d'électrons selon une plage angulaire limitée, de l'ordre de [-70° ; 70°] voire moins si la zone d'intérêt est ombragée à forts angles d'inclinaison.

Ainsi, il n'est pas possible d'acquérir des projections sur la plage angulaire complète lorsque l'échantillon est préparé sous forme de lame. Ceci se traduit par une zone manquante d'information dans l'espace de Fourier de l'objet induisant une résolution anisotrope dans la reconstruction.

A l'inverse, dans le cas d'un échantillon préparé sous forme de pointe, la plage angulaire complète [-90° ; 90°] est disponible. Dans ce cas, l'espace de Fourier de l'objet est échantillonné sans zone manquante et la résolution de la reconstruction est isotrope.

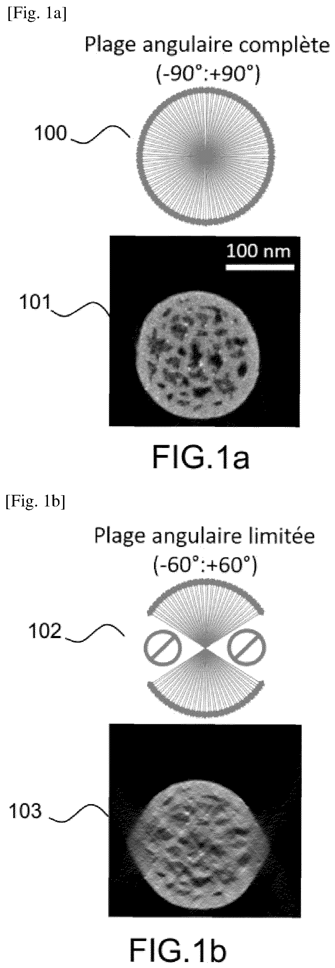

La figure 1a montre un exemple de reconstruction 101 d'une coupe 2D d'un échantillon obtenue pour une plage angulaire complète [-90° ; 90°], pour un échantillon préparé sous forme de pointe. Le schéma 100 illustre l'échantillonnage de l'espace de Fourier de l'objet, pour une plage angulaire complète.

La figure 1b montre un exemple de reconstruction 103 obtenue pour une plage angulaire limitée [-60° ; 60°], pour un échantillon préparé sous forme de lame. Le schéma 102 illustre l'échantillonnage de l'espace de Fourier de l'objet, pour cette plage angulaire limitée. Dans l'exemple de la figure 1b, la zone manquante étant dans la direction horizontale, les pores ainsi que la forme globale de la pointe sont déformés horizontalement et les particules (résolues dans la reconstruction complète 101 de la figure 1a) ne sont pas visibles sur la reconstruction dégradée.

Ainsi, la préparation d'un échantillon sous forme de lame présente l'inconvénient d'une résolution dégradée bien qu'offrant un champ de vue plus large que la préparation sous forme de pointe.

Plusieurs approches ont été proposées pour améliorer la résolution de la tomographie électronique à plage angulaire limitée. Une technique appelée 'dual-axis tomography' (D.N. Mastronarde, J Struct Biol 1997,120(3), 343) permet de réduire la zone angulaire manquante en effectuant une rotation planaire de 90° de l'échantillon et en acquérant une deuxième série de projections. La zone manquante a alors une forme cônique, ce qui réduit légèrement les artefacts de reconstruction sans pour autant atteindre une résolution isotrope. Cette technique nécessite de doubler la dose électronique et le temps d'acquisition, ce qui peut endommager l'échantillon en cours d'analyse.

Des méthodes avancées de reconstruction ont été proposées pour améliorer la qualité des résultats obtenus par tomographie électronique. On cite par exemple « discrete algebraic reconstruction technique » (DART - X. Zhuge et al., Ultramicroscopy 2017, 175, 87), et « compressed sensing » (CS - Z. Saghi et al., Nano Lett. 2011, 11(11), 4666). Ces approches ont montré des résultats prometteurs mais uniquement sur des structures très simples et avec une connaissance a priori forte sur les niveaux de gris (DART) et le domaine de parcimonie de l'objet (CS). Pour des structures complexes, il a été montré que ces approches ne corrigeaient par les artefacts liés à la plage angulaire manquante (e.g. : Y. Jiang et al., Ultramicroscopy 2018, 186,94). Des méthodes de restauration du sinogramme par 'inpainting' ont aussi été proposées pour remplir la zone manquante et atteindre ainsi une résolution isotrope (R. Tovey et al., Inverse Prob 2019, 35, 024004). Les résultats obtenus, illustrés sur un exemple très basique, ne sont pas concluants et offrent très peu d'amélioration par rapport aux méthodes CS.

Récemment, des méthodes d'apprentissage profond ont été appliquées dans le domaine de la tomographie aux rayons X pour améliorer la qualité des reconstructions à partir d'un nombre limité de projections (acquisitions parcimonieuses) ou d'acquisitions très bruitées ('low-dose'). Des résultats prometteurs ont été rapportés dans les deux cas (e.g. : Z. Liu et al., J Opt Soc Am A 2020, 37, 422.), mais très peu d'articles ont abordé le problème spécifique de la plage angulaire limitée (e.g. : Z. Li et al., Sensors 2019, 19, 3941).

Ainsi, il existe un besoin pour une nouvelle méthode d'imagerie par tomographie électronique qui permet à la fois un large champ de vue et une reconstruction avec une résolution isotrope.

L'invention propose l'utilisation d'un modèle d'apprentissage automatique pour apprendre la fonction de correction d'artefacts spécifiques à une plage angulaire limitée lors de l'acquisition des projections.

L'invention permet ainsi de réaliser des acquisitions avec des échantillons préparés sous forme de lame, pour bénéficier d'un large champ de vue, tout en corrigeant les artefacts visibles dans les reconstructions dus à la plage angulaire limitée.

L'invention a pour objet un procédé d'entrainement d'un modèle de correction automatique d'artefacts dans une image d'un échantillon obtenue par tomographie électronique, le procédé comprenant les étapes de :
- Réaliser une acquisition d'un premier ensemble de données de projection d'un échantillon au moyen d'un microscope électronique en transmission apte à émettre un faisceau d'électrons en direction de l'échantillon, pour une pluralité d'angles d'inclinaison de l'échantillon par rapport au faisceau d'électrons appartenant à une première plage angulaire,
- Déterminer un premier ensemble de reconstructions tomographiques de l'échantillon à partir du premier ensemble de données de projection,
- Déterminer un second ensemble de reconstructions tomographiques dégradées de l'échantillon à partir d'un sous-ensemble du premier ensemble de données de projection associé à un sous-ensemble d'angles d'inclinaison de la première plage angulaire,
- Entrainer le modèle de correction d'artefacts à corriger le second ensemble de reconstructions tomographiques dégradées de sorte à obtenir le premier ensemble de reconstructions tomographiques.

Selon un aspect particulier de l'invention, le modèle est un réseau de neurones artificiels convolutionnel ou un réseau de neurones artificiels antagonistes génératifs.

Selon un aspect particulier de l'invention, chaque reconstruction tomographique correspond à une coupe en deux dimensions d'un volume en trois dimensions.

Selon un aspect particulier de l'invention, la première plage angulaire est complète et le sous-ensemble d'angles d'inclinaison correspond à une plage angulaire réduite ou à une plage angulaire sous-échantillonnée de la première plage angulaire.

Selon un aspect particulier de l'invention, l'échantillon est préparé sous forme de pointe.

L'invention a aussi pour objet un procédé d'imagerie d'un échantillon par tomographie électronique, le procédé comprenant les étapes de :
- Réaliser une acquisition d'un ensemble de données de projection d'un échantillon au moyen d'un microscope électronique en transmission apte à émettre un faisceau d'électrons, pour une pluralité d'angles d'inclinaison de l'échantillon par rapport au faisceau d'électrons, appartenant à une plage angulaire réduite,
- Déterminer un premier ensemble de reconstructions tomographiques de l'échantillon à partir dudit ensemble de données de projection,
- Recevoir un modèle de correction automatique d'artefacts entrainé au moyen du procédé d'entrainement selon l'invention pour corriger des artefacts liés à la plage angulaire réduite,
- Exécuter ledit modèle pour le premier ensemble de reconstructions tomographiques de sorte à générer un second ensemble corrigé de reconstructions tomographiques correspondant à une plage angulaire augmentée

Selon un aspect particulier de l'invention, l'échantillon est préparé sous forme de lame.

Selon un aspect particulier de l'invention, l'échantillon à imager est identique à l'échantillon utilisé pour entrainer le modèle de correction automatique d'artefacts.

L'invention a aussi pour objet un dispositif d'imagerie par tomographie électronique comprenant un microscope électronique en transmission et une unité de traitement adaptés pour exécuter les étapes de l'un des procédés selon l'invention, ainsi qu'un programme d'ordinateur comprenant des instructions qui conduisent le dispositif d'imagerie selon l'invention à exécuter les étapes de l'un des procédés selon l'invention.

D'autres caractéristiques et avantages de la présente invention apparaîtront mieux à la lecture de la description qui suit en relation aux dessins annexés suivants.
[Fig. 1a] représente un exemple de reconstruction 2D d'un échantillon pour une acquisition avec plage angulaire complète,
[Fig. 1b] représente un exemple de reconstruction 2D d'un échantillon pour une acquisition avec plage angulaire limitée,
[Fig. 2] représente un organigramme d'un procédé d'entrainement d'un modèle de correction automatique d'artefacts selon un mode de réalisation de l'invention,
[Fig. 3] représente un schéma illustratif de l'entrainement décrit à la figure 2,
[Fig. 4] représente un organigramme d'un procédé d'imagerie par tomographie électronique utilisant le modèle entrainé au moyen du procédé de la figure 2,
[Fig. 5] illustre un exemple de résultats obtenus grâce à l'invention,
[Fig. 6] représente un schéma d'un dispositif d'imagerie par tomographie configuré pour mettre en œuvre l'invention.

La présente invention comporte deux phases : une première phase au cours de laquelle un modèle d'intelligence artificielle est entrainé pour apprendre à corriger des artefacts liés à une plage angulaire d'acquisition réduite puis une seconde phase au cours de laquelle le modèle entrainé est utilisé pour corriger ces artefacts.

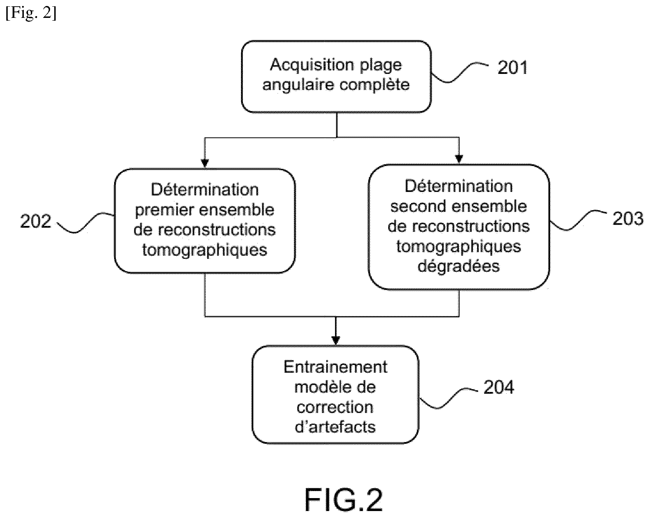

La figure 2 décrit les étapes de mise en œuvre du procédé d'entrainement d'un modèle de correction automatique d'artefacts selon un mode de réalisation de l'invention.

La méthode débute à l'étape 201 par la réalisation d'une acquisition d'une série de projections au moyen d'un microscope électronique en transmission. La série de projections est associée à une série d'angles d'inclinaison qui varient dans une plage angulaire complète [-90° ;90°] avec un incrément prédéfini.

Pour réaliser une acquisition sur une plage angulaire complète, une solution consiste à préparer l'échantillon à imager sous la forme d'une pointe et à l'insérer dans un porte-objet dédié. Dans cette configuration, le porte-objet est incliné, à chaque nouvelle acquisition, d'un angle différent par rapport au faisceau d'électrons émis par le microscope. Le porte-objet tourne par rapport au faisceau d'électron de manière à couvrir la plage angulaire complète [-90° ;90°].

A l'issue de cette première étape 201, on obtient un ensemble de projections dont le nombre correspond au nombre d'angles d'inclinaison, sur la plage angulaire complète ([-90° :+90°]). Chaque projection a une résolution prédéfinie qui dépend des caractéristiques du microscope.

A l'étape 202, on applique ensuite un algorithme de reconstruction tomographique afin de déterminer, à partir de l'ensemble des projections mesurées à l'étape 201, un ensemble d'images de coupes 2D d'un volume comprenant l'échantillon à analyser. Le nombre d'images (égal au nombre de coupes 2D) est défini par la résolution des projections. Typiquement, il est de l'ordre de plusieurs milliers. Un exemple d'algorithme de reconstruction tomographique est l'algorithme SIRT (« Simultaneous iterative reconstruction technique ») (P. Gilbert, J. Theor. Biol. 1972, 36, 105). D'autres algorithmes de reconstruction peuvent être utilisées tels que l'algorithme FBP ( J. Frank (Ed.), Electron tomography, methods for three-dimensional visualization of structures in the cell, 2006, pp. 245-274) qui présente l'avantage d'une plus grande rapidité d'exécution.

A l'étape 203, on applique le même algorithme de reconstruction tomographique que celui utilisé à l'étape 202 mais cette fois sur seulement une partie de l'ensemble des projections mesurées, partie qui correspond à une plage angulaire réduite. La plage angulaire réduite est par exemple égale à [-60° ;60°] ou [-70° ;70°]. Elle peut également être sous échantillonnée par rapport à la plage angulaire complète. Autrement dit, dans ce cas l'incrément angulaire choisi pour la plage angulaire réduite est plus élevé que celui choisi pour la plage angulaire complète.

Le sous-ensemble de projections retenu à l'étape 203 peut également être bruité via l'ajout de bruit afin de simuler une acquisition dégradée par un certain niveau de bruit.

De façon générale, le sous-ensemble de projections retenu à l'étape 203 constitue un ensemble de projections dégradé par rapport à l'ensemble complet utilisé à l'étape 202.

A l'étape 203, on obtient ainsi un second ensemble, dégradé, de reconstructions tomographiques. Ce second ensemble correspond, par exemple, à une acquisition qui aurait été réalisée en préparant un échantillon sous la forme d'une lame et non d'une pointe, ce qui présente l'inconvénient d'une plage angulaire tel que décrit en introduction.

A l'étape 204, on entraine un modèle d'intelligence artificielle pour reconstruire le premier ensemble de reconstructions tomographiques complet à partir du second ensemble de reconstructions tomographiques dégradé.

Le modèle utilisé est par exemple un réseau de neurones artificiels convolutionnel ou un réseau de neurones artificiels antagonistes génératifs. Par exemple, il peut s'agir d'un réseau de neurones de type U-net.

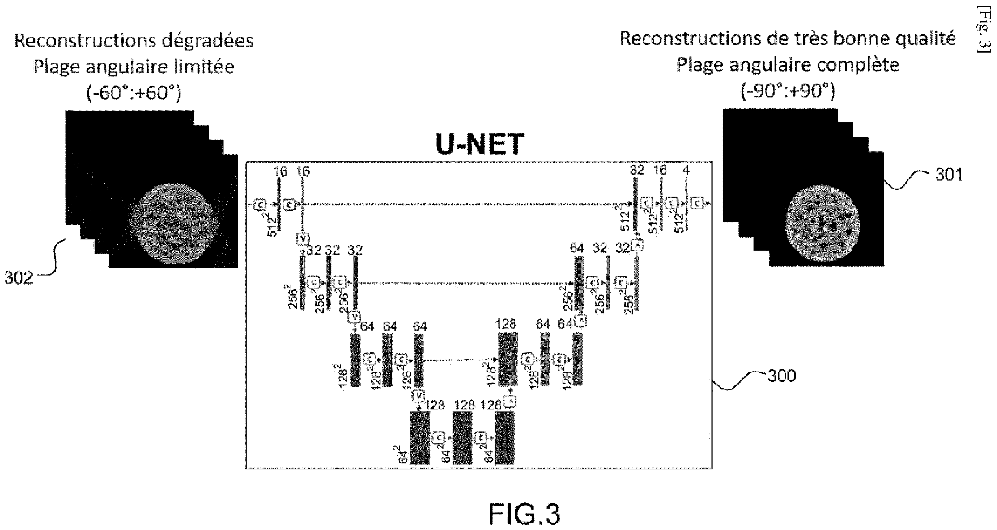

Un exemple possible d'architecture U-Net est un réseau comprenant quatre couches. Chaque couche est une succession de deux couches de convolution de 16, 32, 64 et 128 noyaux (avec un noyau de taille 3 x 3) respectivement, suivie d'une normalisation par batch et d'une fonction d'activation ReLU. Entre chaque couche, un max-pooling 2 x 2 est effectué pendant la phase d'encodage et un sur-échantillonnage 2 x 2 pendant la phase de décodage. Des connexions résiduelles (skip connections) sont ajoutées entre l'encodeur et le décodeur afin d'utiliser les cartes de caractéristiques (feature maps), apprises pendant le processus d'encodage, pour le décodage. Deux couches de convolution avec un seul noyau (taille 1 x 1), une normalisation par batch et une fonction d'activation ReLU sont ajoutées pour récupérer une image à la sortie du réseau.La figure 3 schématise le principe de l'entrainement d'un tel modèle 300. Les paramètres du modèle sont optimisés de manière à minimiser une distance ou fonction de cout entre les reconstructions complètes du premier ensemble 301 et les images restaurées à partir des reconstructions dégradées du second ensemble 302. Autrement dit, le modèle 300 est entrainé pour apprendre une fonction de corrections d'artefacts qui permet de corriger un ensemble de reconstructions dégradées 302 fournies en entrée du modèle pour générer en sortie un ensemble de reconstructions corrigées les plus proches possibles de l'ensemble complet 301. Les artefacts présents dans les reconstructions (images de coupes 2D) sont liées à une plage angulaire limitée lors de l'acquisition des projections et/ou à la présence de bruit de mesure. En particulier, les artefacts à corriger sont des élongations et/ou du flou qui apparait sur l'image dans la direction de la zone angulaire manquante.

La fonction de cout utilisée pour entrainer le modèle est par exemple basée sur un critère de rapport signal à bruit PSNR (« Peak Signal to Noise Ratio ») ou une métrique de similarité SSIM (« Structure Similarity ») entre les images restaurées par le modèle et le premier ensemble complet de reconstructions 301.

Par exemple, le modèle 300 est optimisé au moyen d'un algorithme de rétropropagation du gradient pour mettre à jour les paramètres, ou coefficients synaptiques, du réseau de neurones au fur et à mesure de l'entrainement.

Une dizaine de reconstructions (coupes 2D) est par exemple exclue des données d'entrainement du modèle mais réservées à l'étape de validation du modèle.

Dans une variante de réalisation, le modèle peut être directement entrainé sur des données d'entrainement qui correspondent à des volumes 3D et non plus des images en coupes 2D.

Une fois le modèle entrainé, il peut être utilisé pour corriger des reconstructions incomplètes, notamment celles obtenues à partir de projections mesurées pour des échantillons préparés sous forme de lame qui présentent une limitation de plage angulaire.

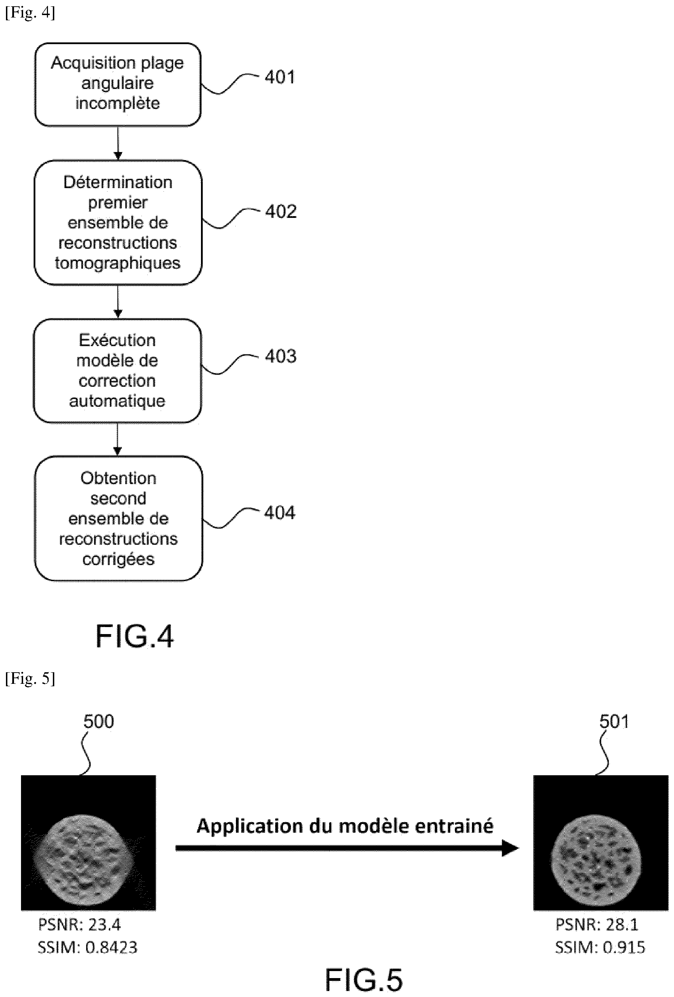

La figure 4 décrit les étapes de mise en œuvre d'un procédé d'imagerie 3D d'un échantillon par tomographie électronique selon un mode de réalisation de l'invention.

Le procédé s'applique plus particulièrement à un échantillon préparé sous forme de lame pour lequel il n'est pas possible de réaliser des acquisitions pour une plage angulaire complète.

Le procédé débute à l'étape 401 par la réalisation d'une acquisition d'une série de projections au moyen d'un microscope électronique en transmission pour un échantillon de même nature que celui utilisé pour réaliser l'étape d'acquisition 201 du procédé d'entrainement décrit à la figure 2.

La différence entre l'étape 401 et l'étape 201 est qu'à l'étape 401, l'acquisition est réalisée pour une plage angulaire incomplète ou dégradée par rapport à celle réalisée à l'étape 201. Cela est dû par exemple au fait que l'échantillon est préparé sous forme de lame ce qui ne permet pas de réaliser des acquisitions pour tous les angles d'inclinaison possibles du porte-objet sur lequel la lame est fixée par rapport à la direction du faisceau d'électrons. Cet empêchement est principalement dû à des questions d'encombrement et de fonctionnement interne du microscope.

A l'étape 402, on applique le même algorithme de reconstruction tomographique que celui utilisé à l'étape 202 pour générer un premier ensemble de reconstructions. Les images obtenues sont dégradées du fait de la plage angulaire incomplète lors de l'acquisition 401.

A l'étape 403, on exécute en inférence le modèle d'intelligence artificielle entrainé au moyen du procédé décrit à la figure 2. Le modèle entrainé prend en entrée le premier ensemble de reconstructions tomographiques obtenu à l'étape 402 et produit en sortie un second ensemble de reconstructions 404 corrigées des artefacts liés à la plage angulaire incomplète.

De cette manière, il est possible d'obtenir des reconstructions sans artefact pour des échantillons préparés sous forme de lame qui bénéficient d'un champ de vue plus large que les échantillons préparés sous forme de pointe. Autrement dit, les reconstructions de coupes 2D obtenues ont une résolution améliorée avec moins de flou et de déformation de détails.

De façon générale, le porte objet utilisé pour générer les données d'entrainement du modèle d'intelligence artificielle permet une acquisition pour une plage angulaire plus élevée (voire totale) que celle qu'il est possible d'obtenir avec le porte objet utilisé à l'étape 401 pour réaliser l'imagerie d'un nouvel échantillon. Ainsi, le porte objet utilisé pour générer les données d'entrainement du modèle est différent du porte objet utilisé pour imager un nouvel échantillon par exécution du modèle entrainé.

La figure 5 illustre un exemple de résultat obtenu par application de l'invention.

L'image 501 est un exemple de reconstruction d'une coupe 2D obtenue à l'étape 402, c'est-à-dire à partir d'un ensemble de projections acquises pour une plage angulaire incomplète de [-60° ; 60°].

L'image 501 est fournie en entrée du modèle entrainé pour générer l'image restaurée 502. Les métriques de rapport signal à bruit et de similarité sont améliorées pour l'image de sortie par rapport à l'image d'entrée.

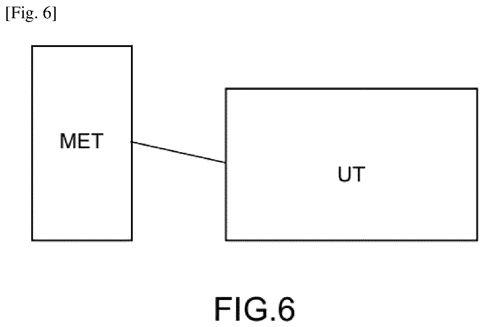

La figure 6 représente un schéma très simplifié d'un dispositif apte à mettre en œuvre l'invention. Un tel dispositif comporte principalement un microscope électronique en transmission TEM apte à réaliser une série d'acquisition de projections pour un échantillon préparé sous forme de pointe ou de lame via un porte-objet dédié. Le dispositif comporte également une unité de traitement UT configurée pour mettre en œuvre l'invention à partir des projections mesurées, notamment exécuter l'algorithme de reconstruction et le modèle de correction automatique. Le dispositif peut également comporter un écran d'affichage ou toute autre interface pour visualiser les reconstructions de coupes 2D obtenues.

L'unité de traitement UT peut être implémentée au moyen d'éléments matériels et/ou logiciels, en particulier un ou plusieurs processeurs, une ou plusieurs mémoires. L'invention peut ainsi être mise en œuvre en tant que programme d'ordinateur comportant des instructions pour son exécution.

Dans une variante de réalisation de l'invention, les acquisitions réalisées pour générer les projections servant de données d'entrainement du modèle (étape 201) sont réalisées avec un pas angulaire plus faible que celui utilisé pour l'imagerie d'un échantillon préparé sous forme de lame (étape 401) afin de générer des reconstructions de plus haute qualité pour l'entrainement du modèle.

Dans une autre variante de réalisation de l'invention, l'entrainement du modèle est réalisé pour un échantillon d'un premier type de matériau puis, d'autres modèles sont entrainés à partir de ce premier modèle via une technique de transfert d'apprentissage pour des échantillons de matériau légèrement différents. Un avantage de cette variante est que cela permet d'éviter un réentrainement complet de chaque modèle pour chaque nouvel échantillon à analyser.

L'invention permet de corriger des artefacts liés à une plage angulaire réduite lors de l'acquisition des projections mais elle permet de façon similaire de corriger des artefacts liés au bruit de mesure.

## Revendications

1. Procédé d'entrainement d'un modèle de correction automatique d'artefacts dans une image d'un échantillon obtenue par tomographie électronique, le procédé comprenant les étapes de :
Réaliser (201) une acquisition d'un premier ensemble de données de projection d'un échantillon au moyen d'un microscope électronique en transmission apte à émettre un faisceau d'électrons en direction de l'échantillon, pour une pluralité d'angles d'inclinaison de l'échantillon par rapport au faisceau d'électrons appartenant à une première plage angulaire,
Déterminer (202) un premier ensemble de reconstructions tomographiques de l'échantillon à partir du premier ensemble de données de projection,
Déterminer (203) un second ensemble de reconstructions tomographiques dégradées de l'échantillon à partir d'un sous-ensemble du premier ensemble de données de projection associé à un sous-ensemble d'angles d'inclinaison de la première plage angulaire,
Entrainer (204) le modèle de correction d'artefacts à corriger le second ensemble de reconstructions tomographiques dégradées de sorte à obtenir le premier ensemble de reconstructions tomographiques.

2. Procédé d'entrainement d'un modèle de correction automatique d'artefacts selon la revendication 1 dans lequel le modèle est un réseau de neurones artificiels convolutionnel ou un réseau de neurones artificiels antagonistes génératifs.

3. Procédé d'entrainement d'un modèle de correction automatique d'artefacts selon l'une quelconque des revendications précédentes dans lequel chaque reconstruction tomographique correspond à une coupe en deux dimensions d'un volume en trois dimensions.

4. Procédé d'entrainement d'un modèle de correction automatique d'artefacts selon l'une quelconque des revendications précédentes dans lequel la première plage angulaire est complète et le sous-ensemble d'angles d'inclinaison correspond à une plage angulaire réduite ou à une plage angulaire sous-échantillonnée de la première plage angulaire.

5. Procédé d'entrainement d'un modèle de correction automatique d'artefacts selon l'une quelconque des revendications précédentes dans lequel l'échantillon est préparé sous forme de pointe.

6. Procédé d'imagerie d'un échantillon par tomographie électronique, le procédé comprenant les étapes de :
Réaliser (401) une acquisition d'un ensemble de données de projection d'un échantillon au moyen d'un microscope électronique en transmission apte à émettre un faisceau d'électrons, pour une pluralité d'angles d'inclinaison de l'échantillon par rapport au faisceau d'électrons, appartenant à une plage angulaire réduite,
Déterminer (402) un premier ensemble de reconstructions tomographiques de l'échantillon à partir dudit ensemble de données de projection,
Recevoir un modèle de correction automatique d'artefacts entrainé au moyen du procédé d'entrainement selon l'une quelconque des revendications précédentes pour corriger des artefacts liés à la plage angulaire réduite,
Exécuter (403) ledit modèle pour le premier ensemble de reconstructions tomographiques de sorte à générer (404) un second ensemble corrigé de reconstructions tomographiques correspondant à une plage angulaire augmentée

7. Procédé d'imagerie d'un échantillon selon la revendication 6 dans lequel l'échantillon est préparé à l'aide d'un porte-objet différent du porte-objet utilisé pour générer les données d'entrainement dudit modèle de correction automatique d'artefacts.

8. Procédé d'imagerie d'un échantillon selon la revendication 7 dans lequel l'échantillon est préparé sous forme de lame.

9. Procédé d'imagerie d'un échantillon selon l'une quelconque des revendications 7 ou 8 dans lequel l'échantillon à imager est identique à l'échantillon utilisé pour entrainer le modèle de correction automatique d'artefacts.

10. Dispositif d'imagerie par tomographie électronique comprenant un microscope électronique en transmission (MET) et une unité de traitement (UT) adaptés pour exécuter les étapes de l'un des procédés selon l'une quelconque des revendications 1 à 9.

11. Programme d'ordinateur comprenant des instructions qui conduisent le dispositif d'imagerie selon la revendication 10 à exécuter les étapes de l'un des procédés selon l'une quelconque des revendications 1 à 9.
